# EUROPÄISCHE PATENTSCHRIFT

(11) **EP 1 233 881 B1**
(45) Veröffentlichungstag und Bekanntmachung des Hinweises auf die Patenterteilung: **23.11.2005**
(21) Anmeldenummer: 00990624.9
(22) Anmeldetag: 30.11.2000
(51) Int. Cl.: B60N 3/08

(54) **KRAFTFAHRZEUG-ALLZWECKBEUTEL**
GENERAL-PURPOSE BAG TO BE USED IN A MOTOR VEHICLE
SAC A USAGE MULTIPLE UTILISE DANS UN VEHICULE A MOTEUR

(30) Priorität: 02.12.1999 DE 29921171 U
(43) Veröffentlichungstag der Anmeldung: 28.08.2002
(73) Patentinhaber: Seifert, Hans Christian, 77770 Durbach (DE)
(72) Erfinder: Seifert, Hans Christian, 77770 Durbach (DE)
(74) Vertreter: Patent- und Rechtsanwaltssozietät Maucher, Börjes & Kollegen
(86) Internationale Anmeldenummer: PCT/EP2000/012014
(87) Internationale Veröffentlichungsnummer: WO 2001/040016

(56) Entgegenhaltungen:
- WO-A-96/17745
- DE-A- 19 531 304
- GB-A- 835 099
- US-A- 2 920 670
- US-A- 5 246 190

## Beschreibung

Die Erfindung betrifft einen Kraftfahrzeug-Allzweckbeutel zur Aufnahme von Kleingegenständen, insbesondere von Kleinabfällen in Kraftfahrzeug-Innenräumen, wobei der Kraftfahrzeug-Allzweckbeutel zumindest ein Befestigungselement zum Befestigen des Kraftfahrzeug-Allzweckbeutels an einem Schaltknüppel, einer Fensterkurbel oder dergleichen Vorsprung hat, und wobei der Kraftfahrzeug-Allzweckbeutel im wesentlichen aus zumindest zwei übereinander liegenden Materiallagen gebildet ist, die in dem Randbereich wenigstens einer Materiallage bis auf eine Einführöffnung miteinander verbunden sind.

In einem Kraftfahrzeug besteht häufig das Problem, Taschentücher, Sonnenbrillen oder andere Gegenstände im Griffbereich des Fahrers zu verstauen, insbesondere dann, wenn das verwendete Kraftfahrzeug keine oder nur eine unzureichende Ablage hat oder die vorhandene Ablage für den vorgesehenen Zweck ungeeignet erscheint.

Auf der Fahrt in einem Kraftfahrzeug wird häufig gewünscht, kleinere Gebrauchs- und Verbrauchsgegenstände, insbesondere den während der Fahrt anfallenden Abfall, in der Nähe des Fahrers oder der Beifahrer griffgünstig unterzubringen. Für solche Kleingegenstände reicht der Platz in den im Fahrzeuginneren vorgesehenen Ablagen häufig nicht aus, insbesondere wenn der Aschenbecher keinen zusätzlichen Platz bietet und sonstige Ablagen bereits durch Landkarten, Scheibenkratzer und andere mitgeführten Gegenstände ausgefüllt sind.

Um vorzugsweise Abfall während der Fahrt sammeln und nach der Fahrt ohne größere Verschmutzungen aus dem Fahrzeuginneren entsorgen zu können, werden von manchen Fahrern kleine Abfallbehälter mitgeführt, die mittels eines Deckels verschlossen werden können. Solche Abfallbehälter können jedoch kaum im Fahrerbereich plaziert und während der Fahrt gehandhabt werden; zudem besteht die Gefahr, dass diese Abfallbehälter sich während der Fahrt unkontrolliert durch das Fahrzeuginnere bewegen und dadurch die Fahrsicherheit gefährden.

Aus der US-PS 5,246,190 ist es bereits bekannt, eine in Kaufhäusern üblicherweise erhältliche Kunststoff-Tüte als Kraftfahrzeug-Allzweckbeutel zu verwenden. Zur Befestigung der Kunststoff-Tüte ist dieser ein Befestigungsteil zugeordnet, das bei Bedarf in der Klappe des Handschuhfaches fixiert werden kann. An diesem Befestigungsteil sind zwei voneinander beabstandete Haken vorgesehen, über welche die Kunststoff-Tüte mit ihren üblicherweise als Grifföffnungen dienenden Schlaufen eingehängt werden kann.

Durch die Befestigung der Kunststoff-Tüte an den voneinander beabstandeten Haken wird die Tüte im Bereich ihrer Einführöffnung derart gespannt, dass die Einführöffnung meist nicht ohne weiteres zugänglich ist. Das Befüllen der Kunststoff-Tüte wird noch dadurch erschwert, dass die Tüte beidseits der Einführöffnung aufgehängt ist und die Einführöffnung daher zum Befüllen der Tüte erst geöffnet werden muss.

Es besteht daher insbesondere die Aufgabe, einen Kraftfahrzeug-Allzweckbeutel zur Aufnahme von Kleingegenständen, insbesondere von Kleinabfällen in Kraftfahrzeug-Innenräumen, zu schaffen, der von den Fahrzeuginsassen, vor allem vom Fahrer, auch während der Fahrt bequem zu erreichen und zu handzuhaben ist, ohne dass die Fahrsicherheit gefährdet wird.

Die erfindungsgemäße Lösung dieser Aufgabe besteht insbesondere darin, dass
- entweder ein über die eine Materiallage überstehender und über die Einführöffnung vorstehender Teilbereich der anderen Materiallage als Befestigungselement ausgebildet ist, welcher Teilbereich eine als Ausstanzung ausgebildete Durchstecköffnung für den Schaltknüppel, die Fensterkurbel oder dergleichen Vorsprung begrenzt,
- oder dass am Kraftfahrzeug-Allzweckbeutel zwei miteinander verknotbare, flexible Materialstreifen als Befestigungselemente vorgesehen sind.

Ist das Befestigungselement als ein über die Einführöffnung vorstehender Teilbereich ausgebildet oder an einem solchen Teilbereich vorgesehen, lässt sich der erfindungsgemäße Kraftfahrzeug-Allzweckbeutel auch in verschiedenen Kraftfahrzeugtypen ohne weiteres einsetzen, wobei die Einführöffnung in einer griffgünstigen und auch für die Fahrzeuginsassen gut erreichbaren Position gehalten werden kann. Der erfindungsgemäße Kraftfahrzeug-Allzweckbeutel lässt sich aber auch bei ausreichend weit geöffneter Einführöffnung sicher und fest im Fahrzeuginneren am Schaltknüppel oder auch an anderen Haltepunkten fixieren, wenn am Kraftfahrzeug-Allzweckbeutel zwei miteinander verknotbare, flexible Materialstreifen als Befestigungselemente vorgesehen sind.

Dabei ist es besonders vorteilhaft, wenn die miteinander verknotbaren Materialstreifen an dem für den Kraftfahrzeug-Allzweckbeutel benötigten Materialzuschnitt einstückig angeformt sind.

Der erfindungsgemäße Kraftfahrzeug-Allzweckbeutel kann somit bequem vorübergehend am Schaltknüppel oder an einer Fensterkurbel fixiert und somit im Griffbereich der Fahrzeuginsassen angeordnet werden, ohne dass zu befürchten ist, dass sich der Kraftfahrzeug-Allzweckbeutel aus der gewählten Position entfernen und unkontrolliert durch das Fahrzeuginnere bewegen kann. Da der erfindungsgemäße Kraftfahrzeug-Allzweckbeutel speziell für die Befestigung an KFZ-Haltevorsprüngen, insbesondere dem Schaltknüppel ausgestaltet ist, kann er mit samt Befüllung bei Bedarf mit einem Griff aus dem Fahrzeuginneren entfernt werden.

Sofern der Kraftfahrzeug-Allzweckbeutel nach dem Gebrauch zusammen mit dem darin beispielsweise enthaltenen Abfall entsorgt werden soll, ist es vorteilhaft, wenn der Kraftfahrzeug-Allzweckbeutel und vorzugsweise das zumindest eine Befestigungselement aus einem wiederverwertbaren Material, insbesondere aus Papier und/oder Kunststoff, hergestellt ist.

Der mit der Herstellung des erfindungsgemäßen Kraftfahrzeug-Allzweckbeutels verbundene Aufwand wird noch zusätzlich reduziert, wenn das Behältnis als Folienbeutel ausgestaltet ist.

Bevorzugt wird eine Ausführungsform, bei der die den Kraftfahrzeug-Allzweckbeutel bildenden, übereinander liegenden Materiallagen im Randbereich wenigstens einer Materiallage miteinander verschweißt oder verklebt sind. Ein solcher Kraftfahrzeug-Allzweckbeutel, dessen übereinander liegenden Materiallagen Bestandteil eines Materialzuschnitts oder auch mehrerer Materialzuschnitte sein können, oder lediglich aus zumindest zwei übereinander liegenden und miteinander verbundenen Materiallagen gebildet ist, lässt sich einfach und kostengünstig herstellen.

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

Es zeigt in schematischen Darstellungen:
- Fig.1: einen als Folienbeutel ausgestalteten Kraftfahrzeug-Allzweckbeutel zur Aufnahme von Kleingegenständen, bei dem ein als Befestigungselement dienender und über die Einführöffnung überstehender Teilbereich eine Durchstecköffnung begrenzt,
- Fig.2: den Kraftfahrzeug-Allzweckbeutel aus Figur 1 in seiner an den Schaltknüppel eines Kraftfahrzeuges fixierten Gebrauchsstellung und
- Fig.3: einen Kraftfahrzeug-Allzweckbeutel, an dem zwei miteinander verknotbare Materialstreifen als Befestigungselemente vorgesehen sind.

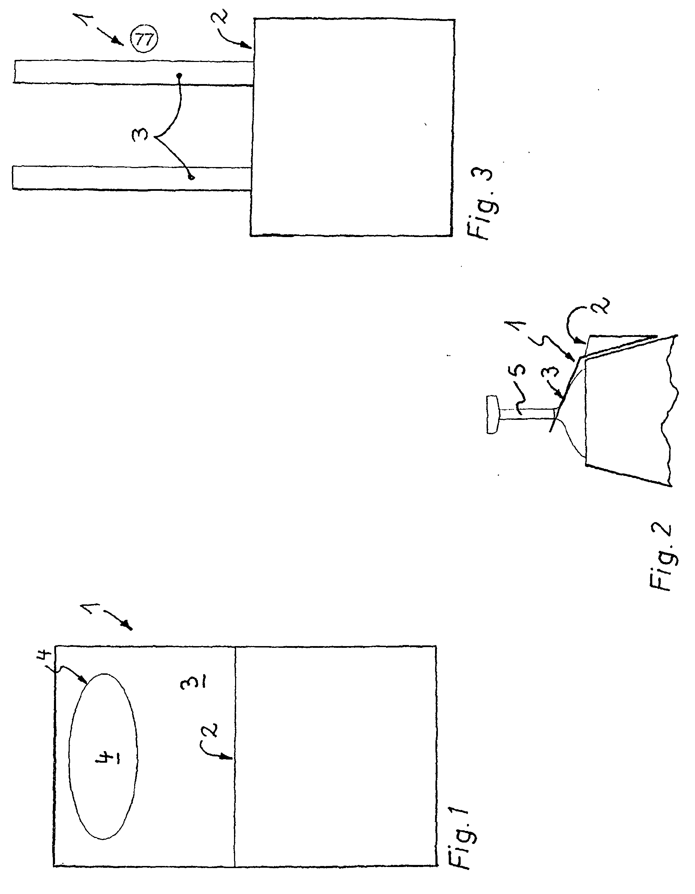

In den Figuren 1 bis 3 ist ein Kraftfahrzeug-Allzweckbeutel 1 in verschiedenen Ausführungen dargestellt, der zur Aufnahme von Kleingegenständen, insbesondere von Kleinabfällen, in Kraftfahrzeug-Innenräumen dient.

Der Kraftfahrzeug-Allzweckbeutel 1 ist hier als Folienbeutel ausgebildet. Er weist zwei, hier etwa rechteckige Materiallagen auf, die in ihren benachbarten Randbereichen bis auf eine Einführöffnung 2 umlaufend dicht miteinander verschweißt, verklebt oder dergleichen verbunden sind.

Um den Kraftfahrzeug-Allzweckbeutel 1 im Bereich des Fahrers vorzugsweise am Schaltknüppel 5 fixieren zu können, weist jeder der in den Figuren 1 bis 3 dargestellten Kraftfahrzeug-Allzweckbeutel 1 zumindest ein Befestigungselement 3 auf.

Dabei ist bei dem Kraftfahrzeug-Allzweckbeutel 1 gemäß Figur 1 und 2 ein über die Einführöffnung 2 vorstehender und als Befestigungselement 3 dienender Teilbereich vorgesehen, der eine Befestigungsöffnung 4 zum Durchstecken des Schaltknüppels der Fensterkurbel oder dergleichen Halte-Vorsprung trägt.

Der Kraftfahrzeug-Allzweckbeutel 1 gemäß Figur 3 weist demgegenüber zwei als Befestigungselemente 3 dienende Materialstreifen auf, die aus flexiblem Material bestehen und unter Bildung einer Durchstecköffnung 4 am Schaltknüppel, an der Fensterkurbel oder dergleichen Haltevorsprung miteinander verknotet werden können.

Die in Figur 3 als Befestigungselemente dienenden Materialstreifen können gegebenenfalls auch einstückig an die benachbarte Materiallage angeformt sein. Um die hier dargestellten Kraftfahrzeug-Allzweckbeutel 1 möglichst kostengünstig herstellen zu können, kann es vorteilhaft sein, wenn diese Kraftfahrzeug-Allzweckbeutel und die an ihnen vorgesehenen Befestigungselemente 3 aus einem einstückigen Materialzuschnitt hergestellt sind. Dabei lässt sich jeder dieser Kraftfahrzeug-Allzweckbeutel 1 insbesondere zum Sammeln von Abfall verwenden, wobei die Kraftfahrzeug-Allzweckbeutel 1 zusammen mit dem darin befindlichen Abfall ohne weiteres zu entsorgen sind, insbesondere wenn diese Kraftfahrzeug-Allzweckbeutel und die an ihnen vorgesehenen Befestigungselemente 3 aus Papier, Kunststoff oder dergleichen wiederverwertbarem Material hergestellt sind.

## Patentansprüche

1. Kraftfahrzeug-Allzweckbeutel (1) zur Aufnahme von Kleingegenständen, der zumindest ein Befestigungselement (3) zum Befestigen des Kraftfahrzeug-Allzweckbeutels (1) an einem Schaltknüppel (5), einer Fensterkurbel oder dergleichen Vorsprung hat, wobei der Kraftfahrzeug-Allzweckbeutel (1) im wesentlichen aus zumindest zwei übereinander liegenden Materiallagen gebildet ist, die in dem Randbereich wenigstens einer Materiallage bis auf eine Einführöffnung (2) miteinander verbunden sind, **dadurch gekennzeichnet, dass**
- entweder ein über die eine Materiallage überstehender und über die Einführöffnung (2) vorstehender Teilbereich der anderen Materiallage als Befestigungselement (3) ausgebildet ist, welcher Teilbereich eine als Ausstanzung ausgebildete Durchstecköffnung (4) für den Schaltknüppel (5), die Fensterkurbel oder dergleichen Vorsprung begrenzt,
- oder dass am Kraftfahrzeug-Allzweckbeutel (1) zwei miteinander verknotbare, flexible Materialstreifen als Befestigungselemente (3) vorgesehen sind.

2. Kraftfahrzeug-Allzweckbeutel nach Anspruch 1, **dadurch gekennzeichnet, dass** der Kraftfahrzeug-Allzweckbeutel (1) und vorzugsweise das zumindest eine Befestigungselement (3) aus einem wiederverwertbaren Material, insbesondere aus Papier und/oder Kunststoff, hergestellt ist.

3. Kraftfahrzeug-Allzweckbeutel nach Anspruch 1 oder 2, **dadurch gekennzeichnet, dass** der Kraftfahrzeug-Allzweckbeutel (1) als Folienbeutel ausgestaltet ist.

4. Kraftfahrzeug-Allzweckbeutel nach einem der Ansprüche 1 bis 3, **dadurch gekennzeichnet, dass** die den Kraftfahrzeug-Allzweckbeutel bildenden, übereinander liegenden Materiallagen im Randbereich wenigstens einer Materiallage miteinander verschweißt oder verklebt sind.

## Claims

1. General-purpose bag (1) to be used in a motor vehicle, for holding small objects, comprising at least one fixing element (3) for attaching the general-purpose bag (1) to a gearshift lever (5), a window winder or similar projection, the general-purpose bag (1) being essentially formed from at least two superimposed layers of material which are joined together in the edge region of at least one layer of material, apart from an insertion opening (2), **characterised in that**
- either a partial region of one layer of material is constructed as a fixing element (3), extending beyond the other layer of material and projecting over the insertion opening (2), said partial region defining a through-opening (4) in the form of a cut-out for the gearshift lever (5), window winder or similar projection,
- or two flexible strips of material which can be tied together are provided as fixing elements (3) on the general-purpose bag (1) for use in a motor vehicle.

2. General-purpose bag (1) to be used in a motor vehicle, **characterised in that** the general-purpose bag (1) and preferably the minimum of one fixing element (3) is made of a recyclable material, particularly paper and/or plastics.

3. General-purpose bag (1) to be used in a motor vehicle according to claim 1 or 2, **characterised in that** the general-purpose bag (1) is in the form of a film or foil bag.

4. General-purpose bag (1) to be used in a motor vehicle according to one of claims 1 to 3, **characterised in that** the superimposed layers of material forming the general-purpose bag are welded or glued together in the edge region of at least one layer of material.

## Revendications

1. Sac à usage multiple utilisé dans un véhicule à moteur (1), destiné à recevoir de petits objets, qui présente au moins un élément de fixation (3) destiné à fixer le sac à usage multiple utilisé dans un véhicule à moteur (1) à un levier de vitesses (5), un lève-vitres ou une saillie similaire, le sac à usage multiple utilisé dans un véhicule à moteur (1) étant formé sensiblement d'au moins deux couches de matériau situées l'une sur l'autre, qui sont reliées l'une à l'autre dans la zone du bord d'au moins une couche de matériau jusqu'à un orifice d'introduction (2), **caractérisé en ce que**
- soit une zone partielle de l'autre couche de matériau, surplombant une des couches de matériau et dépassant de l'orifice d'introduction (2), est réalisée comme un élément de fixation (3), laquelle zone partielle délimite un orifice traversant (4), réalisé comme un matriçage, pour le levier de vitesses (5), le lève-vitre ou une saillie similaire,
- soit **en ce que** deux bandes de matériau flexibles, pouvant être nouées ensemble, sont prévues comme éléments de fixation (3) sur le sac à usage multiple utilisé dans un véhicule à moteur (1).

2. Sac à usage multiple utilisé dans un véhicule à moteur selon la revendication 1, **caractérisé en ce que** le sac à usage multiple utilisé dans un véhicule à moteur (1) et de préférence un des éléments de fixation (3) sont réalisés en un matériau recyclable, notamment en papier ou en une matière plastique.

3. Sac à usage multiple utilisé dans un véhicule à moteur selon la revendication 1 ou 2, **caractérisé en ce que** le sac à usage multiple utilisé dans un véhicule à moteur (1) est réalisé en tant que sachet.

4. Sac à usage multiple utilisé dans un véhicule à moteur selon l'une quelconque des revendications 1 à 3, **caractérisé en ce que** les couches de matériau situées l'une sur l'autre, formant le sac à usage multiple utilisé dans un véhicule à moteur, sont soudées ou collées l'une à l'autre dans la zone du bord d'au moins une couche de matériau.
